# EUROPÄISCHE PATENTSCHRIFT

(11) **EP 1 898 006 B1**
(45) Veröffentlichungstag und Bekanntmachung des Hinweises auf die Patenterteilung: **09.03.2016**
(21) Anmeldenummer: 07405195.4
(22) Anmeldetag: 06.07.2007
(51) Int. Cl.: E03B 7/10

(54) **Frostsichere Auslaufarmatur**
Frost-proof drain fitting
Armature sanitaire anti-gel

(30) Priorität: 08.09.2006 CH 14422006
(43) Veröffentlichungstag der Anmeldung: 12.03.2008
(73) Patentinhaber: R. Nussbaum AG, 4601 Olten (CH)
(72) Erfinder: Bobst, Urs, 4703 Kestenholz (CH); Näf, Andreas, 5000 Aarau (CH); Schreiber, Lukas, 4600 Olten (CH)
(74) Vertreter: Rüfenacht, Philipp Michael

(56) Entgegenhaltungen:
- US-A- 4 314 580
- US-A- 4 821 762
- US-A- 5 842 499
- US-A1- 2001 035 209

## Beschreibung

### Technisches Gebiet

Die Erfindung betrifft eine frostsichere Auslaufarmatur zur Anordnung in einer Gebäudeaussenwand. Die Erfindung betrifft weiter ein Verfahren zum Sanieren einer vorhandenen frostsicheren Auslaufarmatur.

### Stand der Technik

Im Aussenbereich von Gebäuden werden oft Wasserentnahmestellen benötigt, beispielsweise für die Bewässerung von Pflanzen, zum Speisen von Brunnen oder zum Bezug von Wasser für Reinigungszwecke. Es ist dabei üblich, eine Wasserleitung aus dem Innern des Gebäudes durch die Gebäudehülle, also insbesondere durch eine Aussenwand des Gebäudes, hindurch nach aussen zu führen und dort, in der Regel in der Nähe der Gebäudewand, eine Auslaufarmatur (Gartenventil) anzubringen.

In höheren Breiten, in welchen Frost auftreten kann, besteht die Gefahr, dass in der nach aussen führenden, exponierten Wasserleitung befindliches Wasser einfriert und durch die entsprechende Ausdehnung Schäden an der Leitung oder an der Armatur verursacht. Die Eisbildung kann gar ein Platzen der Leitung zur Folge haben. Nach aussen führende Wasserleitungen werden deshalb üblicherweise vor Beginn der kälteren Jahreszeit entleert und durch eine innerhalb des Gebäudes befindliche Armatur abgesperrt. Diese Absperrarmatur ist oft in der Nähe der Haupt-Wasserverteilung, beispielsweise im Keller des Gebäudes, angeordnet.

Dieses Vorgehen hat allerdings mehrere Nachteile. Neben der Umständlichkeit des Entleervorgangs besteht nämlich auch die Gefahr, dass das Entleeren und Absperren vergessen wird und dass somit Schäden an der Wasserleitung oder der Armatur auftreten. Wenn die Leitung während des Winters evakuiert wird, so ist sie saisonal abwechselnd mit Wasser gefüllt bzw. leer, was erfahrungsgemäss zu einer höheren Korrosion im Innern der Leitung führen kann. Schliesslich wird oft auch während des Winters Wasser im Aussenbereich benötigt, wozu vor dem Bezug aufwändig die Absperrarmatur im Gebäudeinnern geöffnet und unmittelbar nach dem Bezug die Leitung wieder entleert und abgesperrt werden muss.

Um diesen Nachteilen zu begegnen, sind frostsichere Auslaufarmaturen entwickelt worden, bei welchen ein Entleeren vor Einbruch der kalten Jahreszeit entfällt und welche auch einen Wasserbezug in der kalten Jahreszeit ermöglichen. Eine derartige Gartenarmatur zeigt beispielsweise die EP 1 122 476 A2 (Kemper). Sie umfasst ein für das Gebäudeinnere vorgesehenes Geradsitzventil, in dem ein Ventilkegel zum Öffnen und Schliessen der Durchgangsöffnung eines Ventilsitzes mittels einer Zwischenspindel verstellbar geführt ist. Die Zwischenspindel ist in einem Auslaufgehäuse im Aussenbereich des Gebäudes gelagert, an ihrem äusseren Ende ist ein Drehgriff angeordnet. Ihr inneres Ende wirkt über eine Verbindungshülse mit dem Ventilkegel im Geradsitzventil zusammen. Zwischen dem Geradsitzventil und dem Auslaufgehäuse ist ein Zwischenrohr angeordnet.

Vor der Montage einer solchen Armatur müssen die Zwischenspindel und das Zwischenrohr präzise abgelängt werden, damit die Zwischenspindel mit dem Ventilkegel des innen angebrachten Geradsitzventils zusammenwirken kann und damit eine dichte Verbindung zwischen dem Zwischehrohr und dem Ventil hergestellt werden kann. Der Arbeitsaufwand für die Montage ist entsprechend hoch. Auch die Sanierung gestaltet sich aufwändig: Der Aussenteil mit dem Ventilteller lässt sich noch verhältnismässig einfach für eine Reparatur oder einen Austausch entfernen; ist aber der Ventilsitz beschädigt, so muss von der Innenseite her das Geradsitzventil ausgebaut werden. Ist dieses innerhalb der Wand unter Putz angeordnet, muss die Innenrand, welche beispielsweise die Innenwand eines Wohnraum bildet, geöffnet werden, was mit einem hohen Arbeitsaufwand sowie mit Lärm- und Staubemissionen verbunden ist. Nach dem Ersetzen des Geradsitzventils muss die Innenwand wieder in den vorherigen Zustand versetzt, d. h. allenfalls verputzt, gemalt, gekachelt oder mit einer Tapete versehen werden.

Die EP 1 347 104 A2 (Mora) betrifft ebenfalls eine frostsichere Auslaufarmatur. Diese ist als Baueinheit ausgeführt, welche den Auslauf, ein langgestrecktes Ventilgehäuse mit einem Ventilsitz und eine innerhalb der Armatur geführte Betätigungsspindel umfasst. Am inneren Ende ist die Baueinheit mit einem Anschlussstück mit Aussengewinde versehen, an welches ein weiterführendes Rohr angeschlossen werden kann. Die Baueinheit wird als Ganzes von aussen in eine nach innen durchgehende Maueröffnung eingesetzt.

Die US 4,821,762 A (W. R. Breneman) beschreibt ebenfalls eine frostsichere Wandarmatur. Sie umfasst ein Gehäuse mit einer durchgehenden Bohrung, einem Wassereinlass und einer Entleeröffnung. Eine entfernbare Kartusche kann in die Bohrung eingeführt werden und beinhaltet einen Ventilmechanismus, eine Bedienungseinheit und eine Stelleinheit zur Steuerung des Ventilmechanismus. Weiter ist ein Rückflussverhinderer in dem Gehäuse untergebracht, welcher mittels einer Druckfeder und einem Ventilteller realisiert wird. Die Druckfeder gibt dabei dem Wasserdruck, welcher bei geöffnetem Ventil auf dem Ventilteller lastet, in der Ausflussrichtung nach. Dagegen drückt zurückfliessendes Wasser den Ventilteller in seine geschlossene Position. Der gesamte Ventilmechanismus mitsamt Stelleinheit kann als Einheit entnommen und zur Erneuerung von Dichtringen wieder eingeführt werden.

Die US 4,314,580 A (D. Steinwand) beschreibt ebenfalls einen frostsicheren Absperrhahn, welcher ein Gehäuse beinhaltet, das einen Rohreinsatz zum Anschluss an eine Wasserquelle eines Gebäudes aufweist. Der Rohreinsatz ist dabei mit dem Gehäuse dicht verbunden. Ein Ventilmechanismus des Gehäuses steuert den Wasserfluss in den Rohreinsatz und wird durch einen länglichen Stellmechanismus von ausserhalb des Gehäuses bedient. Der Ventilmechanismus bleibt auch beim Auswechseln des Rohreinsatzes im Gehäuse befestigt und verhindert das Ausfliessen von Wasser.

Eine weitere frostsichere Armatur ist aus der US 2001/0035209 A1 bekannt. Diese Druckschrift beschreibt eine Ummantelung eines frostsicheren Wandhydranten, welche als Drainage für Wasser dient, das im Fall einer frostbedingten Undichtigkeit aus dem Hydranten austreten kann. Der Hydrant beinhaltet eine Leitung, die eine Wand durchstösst, und einen, im frostsicheren Bereich der Wand liegenden Ventilsitz. Das Ventil wird durch ein innerhalb der Leitung verlaufendes Stellelement bewegt, das von einem Bedienungselement gesteuert wird. Die Ummantelung umschliesst den Hydrant, der mit der Wasserleitung im Innern der Wand verbunden und durch den Ventilsitz verschlossen wird.

US 5 842 499 beschreibt eine ähnliche Auslaufarmatur, mit den Merkmalen des Oberbegriffs von Anspruch 1.

Auch hier muss die Länge der Baueinheit jeweils genau der Dicke der Aussenwand entsprechen, und sie muss bereits in einer frühen Bauphase in die Wand eingebaut und mit der weiterführenden Leitung verbunden werden. Eine Sanierung von der Aussenseite her ist grundsätzlich nur möglich, wenn sich die bei der Montage hergestellte Verbindung der Baueinheit mit der weiterführenden Rohrleitung ohne Weiteres wieder lösen lässt und sich nach dem Austausch der Baueinheit wiederum eine dichte Verbindung von aussen her herstellen lässt. Je nach Verbindungsart und vorgenommener Abdichtung ist dies nicht machbar.

### Darstellung der Erfindung

Aufgabe der Erfindung ist es, eine dem eingangs genannten technischen Gebiet zugehörende frostsichere Auslaufarmatur zu schaffen, welche sich einfach installieren und sanieren lässt.

Die Lösung der Aufgabe ist durch die Merkmale des Anspruchs 1 definiert.

Das Armaturengehäuse weist Befestigungsmittel zur mechanischen Befestigung der Baueinheit an dem die Aussenwand durchstossenden Rohr auf. Die Dichtungselemente der Baueinheit sind als mantelseitig zum Leitungsrohr angeordnete Formdichtungen ausgebildet.

Die Baueinheit ist in der Art einer Kartusche ausgebildet und umfasst den kompletten Absperrmechanismus inklusive Ventilsitz. Bei eingesetzter Baueinheit schliesst innen an das Leitungsrohr der Baueinheit der verbleibende innere Abschnitt des die Aussenwand durchstossenden Rohrs an. Dieselbe Baueinheit kann somit ohne Anpassungen für Aussenwände verschiedener Dicke eingesetzt werden. Voraussetzung ist lediglich, dass der Absperrmechanismus jeweils im frostsicheren Bereich der Wand liegt und dass die Länge des einzuschiebenden Teils kleiner ist als die Länge des Rohrs. Weil bei der Montage keine präzisen Messungen und Anpassungen der Armatur vorgenommen werden müssen, wird der Montagevorgäng wesentlich vereinfacht.

Aufgrund dessen, dass die Baueinheit den gesamten Absperrmechanismus inklusive Ventilsitz umfasst und dass die Baueinheit in das die Aussenwand durchstossende Rohr lediglich eingeschoben ist und somit im Bereich des Absperrmechanismus keine Verbindung (wie z. B. eine Schraubverbindung) geschaffen werden muss, lässt sich die eingesetzte Baueinheit mitsamt Ventilsitz leicht aus der Aussenwand entfernen und durch eine neue oder die reparierte Einheit ersetzen. Selbst in Fällen, in welchen der Ventilsitz beschädigt ist, ist somit auf einfache Art und Weise eine Sanierung ohne Zugang von der Gebäudeinnenseite her möglich.

Für die Montage einer erfindungsgemässen Auslaufarmatur wird zunächst eine durchgehende Öffnung durch die Wand geschaffen. In diese wird dann ein Rohr eingesetzt. Dieses kann anschliessend im Bereich der Wandinnenseite mit einer Zuführleitung verbunden werden, insbesondere mittels gängiger Fittings. Die Innen- und Aussenfläche der Aussenwand können anschliessend weiter bearbeitet werden, z. B. zusätzlich isoliert, verputzt oder gestrichen; die Öffnung an der Wandinnänfläche kann bereits jetzt verschlossen werden, sie muss später nicht mehr zugänglich sein. Die erfindungsgemässe Baueinheit kann - je nach Bauablauf - bereits nach dem Einsetzen des Durchgangsrohrs oder auch zu einem späten Zeitpunkt, z. B. erst nach Fertigstellung der Aussenfläche der Aussenwand, in das Rohr eingeschoben und an diesem befestigt werden.

Für gängige Wanddicken zwischen 250 und 500 mm und gängige Wandkonstruktionen · reichen sowohl für die Neuinstallation als auch für die Sanierung Baueinheiten in zwei bis drei unterschiedlichen Längen aus, damit für jede Aussenwand eine frostsichere Auslaufarmatur zur Verfügung gestellt werden kann. Dadurch können gegenüber bekannten Baueinheiten, die in einer Vielzahl von Längen angeboten werden müssen, Lagerhaltungskosten eingespart werden. Damit die Frostsicherheit bei üblichen Aussenwänden gewährleistet ist, dürften aber die Länge des Leitungsrohrs und der Spindel auch bei der kürzesten Version in der Regel derart gewählt sein, dass bei eingeschobener Baueinheit ein Abstand zwischen einer Aussenfläche der Aussenwand und dem Ventilsitz mindestens 8 cm, bevorzugt ungefähr 15 cm, beträgt.

Im Bereich des Ventiltellers kann ein Rückflussverhinderer angeordnet sein. Dieser kann insbesondere realisiert werden, indem der Ventilteller über eine Druckfeder an der Spindel befestigt ist. So wird verhindert, dass im Fall eines. Unterdrucks in der Zuleitung Schmutzwasser angesaugt wird und in die Zuleitung gelangt.

Mit Vorteil sind die Dichtungselemente zum Abdichten der Baueinheit gegenüber dem die Aussenwand durchstossenden Rohr im Bereich des Absperrmechanismus an der Baueinheit angeordnet. Als Dichtungselemente werden mit Vorteil Formdichtungen wie Lippendichtungen, Quad-Ring-Dichtungen oder X-Ring-Dichtungen eingesetzt. Diese stellen auch bei fertigungsbedingten Toleranzen in der Herstellung des Leitungsrohrs eine vollständige Abdichtung sicher. Durch die somit im vordersten Bereich angeordneten Dichtungselemente wird sichergestellt, dass kein Wasser in den (allenfalls frostgefährdeten) Bereich zwischen dem Durchgangsrohr und dem Leitungsrohr eindringen kann. Das hinter den Dichtungselementen gebildete "Luftpolster" wirkt zudem als zusätzliche Isolation zwischen Wand und Leitungsrohr. Derjenige Abschnitt des Rohrs, in welchem das Leitungsrohr der Auslaufarmatur aufgenommen ist, hat also keine direkte flüssigkeitsführende Funktion, d. h. in diesem Abschnitt wird sämtliche Flüssigkeit durch das Leitungsrohr der Auslaufarmatur geführt.

Die Verbindung zwischen dem Rohr und dem Armaturengehäuse braucht entsprechend nicht fluiddicht zu sein. Es sind somit an dieser Stelle keine Abdichtmassnahmen notwendig, was die Montage gegenüber heute üblichen Lösungen wesentlich vereinfacht.

Bevorzugt ist der Ventilsitz an einem rohrförmigen Aufsatz ausgebildet. Der Aufsatz umschliesst teilweise das Leitungsrohr und umfasst im Bereich seines Aussenmantels die Dichtungselemente zur Abdichtung gegenüber dem die Aussenwand durchstossenden Rohr. Die beschriebene Lösung lässt sich einfach realisieren; die Dichtungselemente können beispielsweise als umlaufende Formdichtungen bzw. O-Ringe ausgebildet sein, die in Ringnuten im Aussenmantel des Aufsatzes aufgenommen sind.

Mit Vorteil wird das Armaturengehäuse am Durchgangsrohr mechanisch befestigt. Dazu weist das Armaturengehäuse ein Innengewinde zum Aufschrauben auf ein entsprechendes Aussengewinde des die Aussenwand durchstossenden Rohrs auf. So kann eine sichere und zugfeste Verbindung zwischen der Baueinheit und dem Durchgangsrohr geschaffen werden, die sich später auch leicht wieder lösen lässt. Die Wand durchstossende Rohre von vorhandenen frostsicheren Auslaufarmaturen sind meist bereits mit einem Aussengewinde versehen; die Nachrüstung mit der erfindungsgemässen Armatur kann somit auf einfache Art und Weise erfolgen.

Alternativ und nicht beansprucht wird die lösbare mechanische Verbindung zwischen dem Durchgangsrohr und der Baueinheit auf eine andere Art und Weise hergestellt, beispielsweise durch eine Steck- oder Klemmverbindung.

Das Armaturengehäuse umfasst vorzugsweise ein Außengehäuse sowie einen darin aufgenommenen Einsatz. Der Einsatz weist ein Lager auf für die Spindel sowie Dichtungselemente zur Abdichtung gegenüber dem Aussengehäuse sowie gegenüber der Spindel. Der Einsatz ist zudem flüssigkeitsdicht mit dem Leitungsrohr verbunden. Dadurch lässt sich das Aussengehäuse einfach ausbilden, das verwendete Material muss nicht nach seiner Bearbeitbarkeit ausgewählt werden, sondern kann hinsichtlich der Eignung als der Witterung und mechanischer Beanspruchung ausgesetztes, robustes Aussengehäuse optimiert und z. B. aus Messing gefertigt werden. Der Einsatz kann aus einem leichter bearbeitbaren Material, z. B. aus einem Kunststoff, hergestellt werden.

Die erfindungsgemässe Auslaufarmatur eignet sich auch zum Nachrüsten bei bestehenden frostsicheren Wasserentnahmestellen, insbesondere dann, wenn die bestehende frostsichere Auslaufarmatur bereits ein die Aussenwand durchstossendes Rohr umfasst. Derartige Armaturen weisen in der Regel eine Auslaufarmatur mit einer Spindel auf, wobei am vorderen Ende der Spindel ein Ventilteller zur Abdichtung gegenüber einem an einem Gegenelement angeordneten Ventilsitz angeordnet ist. Das vorhandene Rohr kann für die nachzurüstende Auslaufarmatur weiter verwendet werden, indem
a) zunächst die vorhandene Auslaufarmatur mitsamt der Spindel und dem Ventilteller entfernt wird; und anschliessend
b) das vordere Ende der Baueinheit in das vorhandene, die Aussenwand durchstossende Rohr eingeschoben wird, wobei die Baueinheit durch die mantelseitig zum Leitungsrohr angeordneten Formdichtungen gegen das die Aussenwand durchstossende Rohr abgedichtet wird und
c) die Baueinheit am Rohr mechanisch befestigt wird.

Vor dem Einschieben der Baueinheit kann es angezeigt sein, das vorhandene, die Aussenwand durchstossende Rohr zu reinigen und/oder zu entgraten, damit die Baueinheit leicht eingeschoben werden kann und nicht beschädigt wird (z. B. aussenliegende Dichtelemente). Der Ventilsitz der vorhandenen Armatur verbleibt in der Aussenwand, hat aber nach der Sanierung keine Funktion mehr. Die Länge der Baueinheit der neuen Armatur wird so gewählt, dass ihr Absperrmechanismus sich im eingeschobenen Zustand im frostsicheren Bereich des Durchgangsrohrs befindet, dass aber ihr vorderes Ende vor dem verbleibenden, nun unbenutzten Ventilsitz zu liegen kommt.

Durch die mantelseitig zum Leitungsrohr angeordneten Formdichtungen wird die Abdichtung automatisch beim Einschieben der Baueinheit in das die Aussenwand durchstossende Rohr geschaffen. Das Armaturengehäuse kann bereits vor dem Einschieben der Baueinheit komplett an dieser befestigt werden, oder gewisse Elemente des Armaturengehäuses werden erst angebracht, wenn die Baueinheit in das die Aussenwand durchstossende Rohr eingeschoben worden ist.

Häufig weisen Durchgangsrohre von vorhandenen frostsicheren Auslaufarmaturen Innendurchmesser von 1 Zoll, also ca. 2.5 cm, auf. Bei derartigen Rohrdurchmessern erlaubt auch der durch den Querschnitt des Leitungsrohrs verringerte Leitungsquerschnitt noch bei weitem die gewünschten Durchflussmengen. Das Einsetzen der Baueinheit hat nun aber aufgrund des verringerten Leitungsquerschnitts und der geringeren Länge des Abschnitts zwischen Absperrmechanismus und Entleeröffnung zusätzlich den positiven Effekt, dass aufgrund des entsprechend verringerten Volumens zwischen der Entleeröffnung und dem Absperrmechanismus die Abtropfzeit, d. h. die Zeit, die nach dem Schliessen des Absperrmechanismus bis zum vollständigen Abschluss der Wasserabgabe verstreicht, wesentlich verkürzt wird. Weil Bediener bei langen Abtropfzeiten oft vermuten, das Ventil sei noch nicht vollständig geschlossen, versuchen sie, das Ventil nachzuziehen, teilweise mit hohen Kräften. Dadurch kann der Ventilteller beschädigt werden. Die Verkürzung der Abtropfzeit hat somit Vorteile für die Lebensdauer der Auslaufarmatur.

Das erfindungsgemässe Verfahren zum Sanieren der Auslaufarmatur ist gerade auch bei Gebäuderenovationen anwendbar, bei welchen eine zusätzliche Schicht Aussenisolation auf die Gebäudehülle aufgebracht ist. In solchen Fällen wird das vorhandene, die (bisherige) Aussenwand durchstossende Rohr durch ein daran mechanisch befestigtes Verlängerungsstück bis zur neuen Wandaussenfläche verlängert. Am äusseren Ende dieses Verlängerungsstücks kann dann die Baueinheit angebracht werden. Weil der ausserhalb des Absperrmechanismus der erfindungsgemässen Auslaufarmatur liegende Teil des Durchgangsrohrs keine wasserführende Funktion hat und in diesem Bereich somit auch nicht abgedichtet sein muss, ist die Befestigung des Verlängerungsstücks am Durchgangsrohr unkritisch. Weist das Durchgangsrohr beispielsweise ein Aussengewinde auf, so kann das Verlängerungsstück derart ausgebildet sein, dass es im Bereich des innenliegenden Endes ein entsprechendes Innengewinde aufweist, während im Bereich des aussenliegenden Endes wiederum ein Aussengewinde mit gleichem Querschnitt wie das Aussengewinde des vorhandenen Durchgangsrohrs vorhanden ist. Ein einfaches Aufschrauben des Verlängerungsstücks reicht im Rahmen der Erfindung aus, damit anschliessend die Baueinheit in das verlängerte Rohr eingeschoben werden kann.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Einen Querschnitt durch eine erfindungsgemässe Auslaufarmatur; und
- Fig. 2: die Armatur in eingebautem Zustand

Grundsätzlich sind in den Figuren gleiche Teile mit gleichen Bezugszeichen versehen.

### Wege zur Ausführung der Erfindung

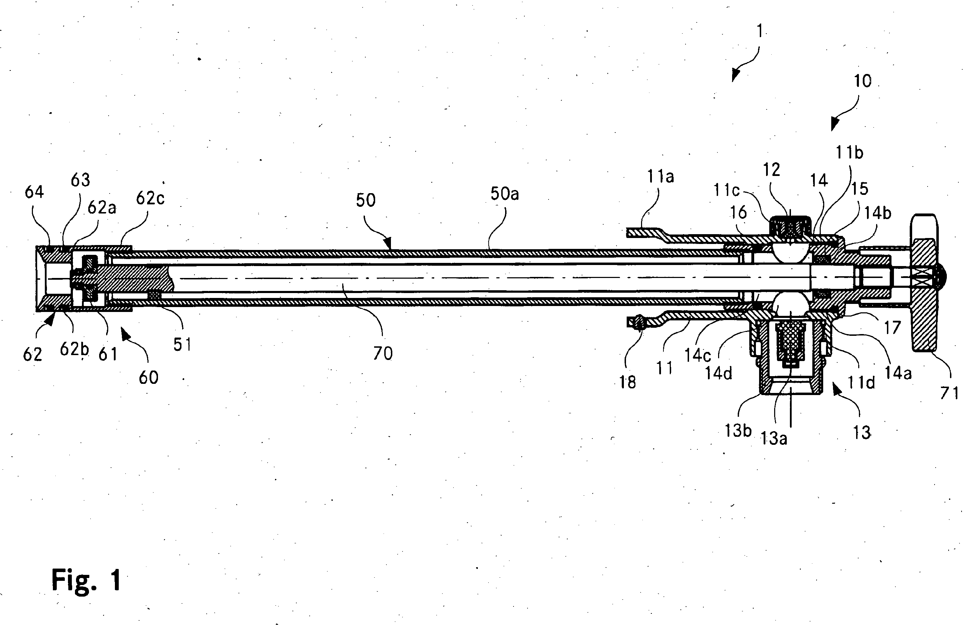

Die Figur 1 zeigt einen Querschnitt durch eine erfindungsgemässe Auslaufarmatur in der Ebene ihrer Längsachse. Die dargestellte Querschnittsebene ist bei montierter Armatur senkrecht orientiert. Die Auslaufarmatur 1 setzt sich zusammen aus einem Armaturengehäuse 10 zur Anordnung auf der Aussenseite einer Gebäudeaussenmauer, einem an das Armaturengehäuse 10 anschliessenden Leitungsrohr 50 sowie einem am vorderen Ende des Leitungsrohrs 50 angeordneten Absperrmechanismus 60 und einer im Leitungsrohr 50 verlaufenden Spindel 70 zur Betätigung des Absperrmechanismus 60.

Das Armaturengehäuse 10 umfasst ein Aussengehäuse 11 aus Messing, welches im Wesentlichen rohrförmig ausgebildet ist. An seinem vorderen Ende 11a ist der Rohrquerschnitt aufgeweitet. In diesem Bereich ist im Aussengehäuse 11 eine durchgehende, radiale Aufnahme für einen Gewindestift 18 ausgebildet. Die Aussenform weist hier zudem eine Profilierung (z. B. als Sechskant) auf, so dass die Auslaufarmatur 1 für das Anschrauben oder Lösen besser erfasst werden kann. In "seinem hinteren Bereich weist das Aussengehäuse 11 eine axiale Aufnahme 11 b auf sowie zwei gegenüberliegende radiale Aufnahmen 11c, 11d. Letztere werden durch senkrecht zur Hauptachse des Aussengehäuses 11 abzweigende Rohrabschnitte gebildet, die in flüssigkeitsleitender Verbindung mit dem axialen Rohr stehen. Das abzweigende Rohr der ersten radialen Aufnahme 11c weist ein Aussengewinde auf, auf welches ein an sich bekannter Belüftungsventilaufsatz 12 geschraubt werden kann. Das Entlüftungsventil ist derart ausgebildet, dass es sich beim Unterschreiten eines gewissen innenseitigen Wasserdrucks öffnet; somit wird das Entleeren des entsprechenden Leitungsabschnitts nach dem Absperren der Armatur unterstützt. Das abzweigende Rohr der anderen radialen Aufnahme 11d weist ein Innengewinde auf, so dass ein ebenfalls an sich bekannter Auslaufeinsatz 13 mit einem Schlauchbelüfter 13a eingeschraubt werden kann. Der Schlauchbelüfter 13a sorgt für das Leerlaufen eines angeschlossenen Schlauchs und verhindert ein Rücksaugen von Flüssigkeit aus dem Schlauch in die Zuleitung. Der Abschnitt 13b des Auslaufeinsatzes 13, welcher über die radiale Aufnahme 11d hervorragt, besitzt aussenseitig ein Aussengewinde, an welchem eine Schlauchtülle oder ein Kupplungsstück für ein Schlauchsystem befestigt werden kann.

Die axiale Aufnahme 11 b weist ein Innengewinde auf, in welches ein Einsatz 14 aus Messing mit einem Aussengewinde 14a eingeschraubt und derart befestigt ist, dass er während der Betätigung des Absperrmechanismus 60 verdrehsicher gehalten ist. Der Einsatz 14 bildet an seinem aussenliegenden, im Bereich der Öffnung des Aussengehäuses 11 liegenden Abschnitt einen rohrartigen Innenraum 14b, in welchem die Spindel 70 aus Messing fluiddicht aber drehbar gelagert ist. In diesem Abschnitt ist zudem ein Innengewinde ausgebildet, welches mit einem entsprechenden Aussengewinde der Spindel 70 zusammenwirkt. Mit dem hinteren Ende der Spindel 70 ist ein Handgriff 71 (Handrad) als Bedienungselement drehfest verbunden. Durch eine Drehbewegung des Handgriffs 71 kann somit die Spindel 70 entlang ihrer Längsachse verstellt werden.

In seinem innenliegenden Abschnitt erweitert sich der rohrartige Innenraum 14b des Einsatzes 14 zu einer Kammer 14c. Innerhalb dieser Kammer 14c, im Bereich der beiden radialen Aufnahmen 11c, 11 d, ist eine umlaufende Ringkammer 14d ausgebildet, welche zusammen mit dem Belüftungsventileinsatz 12 und dem Schlauchbelüfter 13a gewährleistet, dass in jedem Fall ein vollständiges Entleeren der Kammer 14c und des daran anschliessenden Leitungsabschnitts stattfinden kann. Zur Abdichtung der Spindel 70 gegenüber dem Einsatz 14 ist im rohrartigen Innenraum 14b, angrenzend an den Übergang zur Kammer 14c eine Ausnehmung mit einer Lippendichtung 15 angeordnet. Ferner sind zwei O-Ringe 16, 17 in mantelseitigen Nuten des Einsatzes 14 aufgenommen und dichten den Einsatz 14 gegenüber dem Aussengehäuse 11, beidseits der abzweigenden Rohrabschnitte, ab.

Mit dem vorderen Ende des Einsatzes 14 verschraubt und fluiddicht verklebt ist das Leitungsrohr 50 aus Messing. Seine Achse fällt mit der Hauptachse des Armaturengehäuses 10 sowie mit der Längsachse der Spindel 70 zusammen. Der Querschnitt der Spindel 70 ist derart, dass zwischen ihrem Mantel und der Innenwand des Leitungsrohrs 50 ein ringförmiger Zwischenraum verbleibt, welcher ausreicht, um die gewünschten Durchflussmengen zum Auslauf zu führen. Nahe dem vorderen Ende des Leitungsrohrs 50 ist ein Lagerelement 51 aus Kunststoff im Rohr aufgenommen. Dieses umfasst drei miteinander mechanisch verbundene, Stützkörper, welche entlang des Umfangs gleichmässig zwischen der Innenwand des Leitungsrohrs 50 und dem Mantel der Spindel 70 angeordnet sind. Das Lagerelement 51 zentriert und lagert die Spindel 70 nahe ihrem vorderen Ende.

Am vorderen Ende der Spindel 70 ist ein Ventilteller 61 axial unverschiebbar angeordnet. Zu diesem Zweck ist der Ventilteller 61 auf einen entsprechend geformten Abschnitt der Spindel 70 aufgeschoben und zwischen einem dahinter liegenden Absatz der Spindel 70 und einer davor aufgeschraubten Sicherungsmutter gehalten. Der Ventilteller 61 aus Rotguss umfasst auf seiner vorderen Stirnfläche ein Abdichtelement, z. B. eine Gummidichtung, und wirkt mit einem Ventilsitz 62a zusammen, welcher an einem nach innen gezogenen Abschnitt 62b einer im Wesentlichen zylindrischen Hülse 62 des Absperrmechanismus 60 ausgebildet ist. Die Hülse 62 ist aus Messing gefertigt und weist an ihrem hinteren Ende ein Innengewinde 62c auf, mit welchem sie auf ein Aussengewinde 50a des Leitungsrohrs 50 geschraubt ist. Zusätzlich ist die Hülse 62 mit dem Leitungsrohr 50 fluiddicht verklebt. Im vordersten Abschnitt der Hülse 62 sind mantelseitig zwei Nuten ausgespart, in welchen je eine Formdichtung 63, 64 aufgenommen ist.

Durch Betätigen des Handgriffs 71 kann der Ventilteller 61 in axialer Richtung verstellt werden, bis er auf dem Ventilsitz 62a der Hülse 62 aufliegt und gegenüber diesem abdichtet. Der Absperrmechanismus 60 ist somit als Spindelventil (Niederschraubventil) ausgebildet, welches ein Absperren und Regulieren an der vorderen Eingangsöffnung der erfindungsgemässen Armatur ermöglicht.

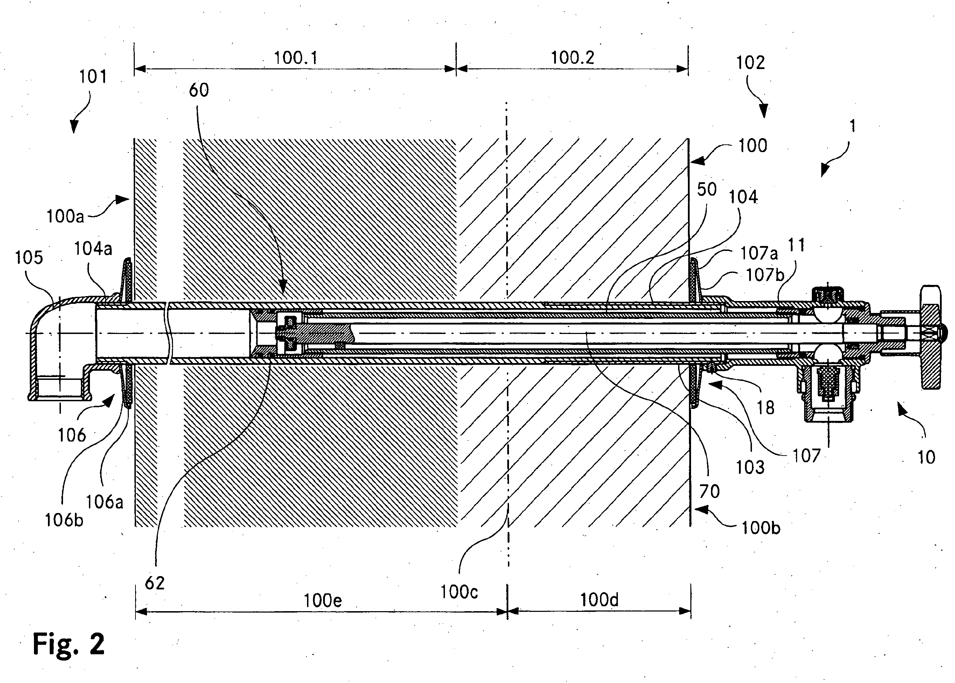

Die Figur 2 zeigt die Armatur in eingebautem Zustand, wobei wiederum derselbe Querschnitt dargestellt ist wie in der Figur 1. Die als Beispiel dargestellte Aussenwand 100 eines Gebäudes besteht im Wesentlichen aus einer Steinmauer 100.1, welche auf ihrer Aussenseite mit einer Isolation 100.2 versehen ist. Durch diese Aussenwand verläuft eine vom Gebäudeinnenraum 101 bis zum Gebäudeaussenraum 102 durchgehende zylindrische Öffnung 103. In diese Öffnung 103 ist ein gerades zylindrisches Rohr 104, beispielsweise mit einem Aussendurchmesser von 1 Zoll (ca. 2.5 cm), eingesetzt, dessen Länge etwas grösser ist als die Dicke der Aussenwand 100, so dass das Rohr 104 sowohl im Gebäudeinnenraum 101 als auch im Gebäudeaussenraum 102 etwas über die Aussenwand 100 vorsteht. Im Gebäudeinnenraum ist das Rohr 104 über ein gängiges Winkelstück 105 mit einer Zuleitung (nicht dargestellt) verbunden. Dazu ist das Winkelstück 105 auf ein Aussengewinde 104a des innen über die Innenfläche 100a der Aussenwand 100 überstehenden Abschnitts des Rohrs 104 aufgeschraubt. Zwischen dem Winkelstück 105 und der Innenfläche 100a der Aussenwand 100 ist eine Rosette 106 eingespannt. Diese besteht - in an sich bekannter Weise - aus einer Flachdichtung 106a aus Gummi sowie einem federnden Ringblech 106b.

In das die Aussenwand 100 durchstossende Rohr 104 ist der vordere Teil der erfindungsgemässen Auslaufarmatur 1, d. h. der vordere Abschnitt des Leitungsrohr 50 mit dem Absperrmechanismus 60, eingeschoben worden. Der Aussendurchmesser der Hülse 62 des Absperrmechanismus 60 ist nur geringfügig kleiner als der Innendurchmesser des Rohrs 104, der vordere Teil der Auslaufarmatur 1 ist somit sicher innerhalb des Rohrs 104 gehalten. Über ein in seinem aufgeweiteten Abschnitt ausgebildetes Innengewinde ist das Aussengehäuse 11 des Armaturengehäuses 10 mit einem entsprechenden Aussengewinde am nach aussen überstehenden Abschnitt des Rohrs 104 verschraubt. Der nach dem Aufschrauben und korrekten Positionieren des Armaturengehäuses 10 festgezogene Gewindestift 18 wirkt radial auf das Rohr 104 und verhindert ein ungewolltes Verdrehen der Auslaufarmatur 1 und damit des Armaturengehäuses 10. Zwischen dem Aussengehäuse 11 und der Aussenfläche 100b der Aussenwand 100 ist eine Rosette 107 eingespannt. Diese besteht - in an sich bekannter Weise - aus einer Flachdichtung 107a aus Gummi sowie einem federnden Ringblech 107b. Das die Aussenwand 100 durchstossende Rohr 104 ist also zwischen den beiden Rosetten 106, 107 eingespannt und somit axial unverschiebbar an der Aussenwand 100 befestigt. Das vordere Ende der Auslaufarmatur 1 mündet in das Rohr 104. Bei geöffnetem Absperrmechanismus 60, d. h. bei zurückgezogenem Ventilteller, ist also eine flüssigkeitsleitende Verbindung zwischen dem Leitungsrohr 50 der Auslaufarmatur 1 und dem die Aussenwand 100 durchstössenden Rohr 104 geschaffen. Die mantelseitig an der Hülse 62 des Absperrmechanismus 60 angeordneten Formdichtungen 63, 64 schaffen eine Abdichtung zum Rohr 104, so dass derjenige Abschnitt des Rohrs 104, in welchem das Leitungsrohr 50 der Auslaufarmatur 1 aufgenommen ist, keine direkte flüssigkeitsführende Funktion hat, d. h. in diesem Abschnitt wird sämtliche Flüssigkeit durch das Leitungsrohr 50 der Auslaufarmatur 1 geführt. Die Verbindung zwischen dem Rohr 104 und dem Aussengehäuse 11 des Armaturengehäuses 10 braucht entsprechend auch nicht fluiddicht zu sein. Es sind somit an dieser Stelle keine Abdichtmassnahmen (z. B. mit Hanf) notwendig.

Bei kalter Witterung herrschen im Gebäudeaussenraum 102 Temperaturen unterhalb des Gefrierpunkts von Wasser, während im (geheizten) Gebäudeinnenraum 101 Raumtemperatur herrscht. Entsprechend existiert im Bereich der Aussenwand 100 eine Grenzfläche 100c, welche die Aussenwand 100 in einen äusseren, frostgefährdeten Bereich 100d, in welchem Temperaturen unterhalb des Gefrierpunkts von Wasser herrschen können, sowie in einen inneren, frostsicheren Bereich 100e, in welchem die Gefriertemperatur auch bei tiefen Aussen- und Innentemperaturen nicht unterschritten wird, unterteilt. Die Länge des Leitungsrohrs 50 und der Spindel 70 sind nun so auf die Dicke und die Konstruktion der Aussenwand 100 sowie auf die erwarteten minimalen Aussen- und Innentemperaturen angepasst, dass der Absperrmechanismus 60 im (stets) frostsicheren Bereich 100e der Aussenwand 100 liegt.

Weil der innere Teil des wasserführenden Leitungssystems durch das die Aussenwand 100 durchstossende Rohr 104 gebildet ist, ist ansonsten die Länge des einschiebbaren Teils der erfindungsgemässen Armatur 1 nicht kritisch. Studien haben gezeigt, dass sich mit lediglich zwei unterschiedlich langen Armaturen, nämlich einer ersten Armatur mit einer Einschublänge (Distanz zwischen Aussenfläche der Aussenwand und Ventilsitz) von 150 mm und einer zweiten Armatur mit einer Einschublänge von 250 mm, bereits praktisch alle in Westeuropa gängigen Aussenwände mit einer erfindungsgemässen Armatur versehen lassen. Im Rahmen der Installation der Armatur sind keine Anpassungen wie ein Kürzen von Betätigungselementen oder Rohren notwendig.

Weil bei einer Vielzahl existierender frostsicherer Wasserentnahmestellen zudem bereits die Aussenwand durchstossende Rohre vorhanden sind, gestaltet sich der Austausch bzw. die Sanierung der vorhandenen Armatur besonders einfach, weil lediglich der äussere Teil der alten Armatur (exklusive Ventilsitz) entfernt werden muss und anschliessend die neue Armatur in das vorhandene Rohr eingeschoben und an diesem befestigt werden kann. Die Armatur ist aber besonders auch für - im Rahmen von Um- oder Neubauten - neu erstellte frostsichere Wasserentnahmestellen geeignet.

Die Erfindung beschränkt sich nicht auf das vorstehend dargestellte Ausführungsbeispiel, sondern wird durch die Ansprüche definiert. So können konstruktive Merkmale der Armatur anders ausgeführt werden, es können insbesondere für die verschiedenen Bauelemente andere Materialien (Metalle, Legierungen, Kunststoffe, Verbundmaterialien etc.) zum Einsatz kommen. Die Wasserentnahmestelle kann auch derart ausgeführt sein, dass der Anschluss an die Zuleitung auf der Innenseite der Aussenwand unter Putz angeordnet ist; in diesem Fall erübrigt sich beispielsweise auch die innenseitige Rosette.

Wie weiter oben erwähnt, lässt sich die Armatur überdies zusätzlich mit einem Rückflussverhinderer versehen, welcher beispielsweise als zwischen der Spindel und dem Ventilteller angeordnete Druckfeder ausgebildet sein kann.

Zusammenfassend ist festzustellen, dass durch die Erfindung eine frostsichere Auslaufarmatur geschaffen wird,-welche sich einfach installieren und sanieren lässt.

## Patentansprüche

1. Frostsichere Auslaufarmatur, umfassend eine mit einem vorderen Ende in ein eine Aussenwand durchstossendes Rohr (104) einschiebbare Baueinheit (1) mit
a) einem im Bereich des vorderen Endes angeordneten Absperrmechanismus (60), umfassend einen Ventilsitz (62a) und einen damit zusammenwirkenden Ventilteller (61);
b) einem an einem dem vorderen Ende längs gegenüberliegenden hinteren Ende der Baueinheit (1) angeordneten Armaturengehäuse (10) mit Entleeröffnung (11d, 13) und Bedienungselement (71);
c) einem Leitungsrohr (50), welches in flüssigkeitsleitender Verbindung mit dem Absperrmechanismus (60) und der Entleeröffnung (11d, 13) steht;
d) einer Spindel (70) zum Bewegen des Ventiltellers (61), wobei die Spindel (70) im Leitungsrohr (50) verläuft und das Bedienungselement (71) mit dem Absperrmechanismus (60) koppelt; sowie
e) Dichtungselementen (63, 64) zum Abdichten der Baueinheit (1) gegenüber dem die Aussenwand durchstossenden Rohr (104); wobei
f) bei eingeschobener Baueinheit (1) das vordere Ende des Leitungsrohrs (50) mit dem Absperrmechanismus (60) in das die Aussenwand durchstossende Rohr (104) mündet und wobei eine Länge des Leitungsrohrs (50) und der Spindel (70) derart gewählt ist, dass der Absperrmechanismus (60) bei eingeschobener Baueinheit (1) In einem frostsicheren Bereich (100e) der Aussenwand (100) oder in einem frostsicheren Bereich auf der Innenseite der Aussenwand zu liegen kommt,
g) die Dichtungselemente (63, 64) der Baueinheit als mantelseitig zum Leitungsrohr (50) angeordnete Formdichtungen ausgebildet sind,
**dadurch gekennzeichnet, dass**
h) das Armaturengehäuse (10) ein Aussengehäuse (11) umfasst, welches im Wesentlichen rohrförmig ausgebildet ist, wobei das Aussengehäuse (11) an seinem vorderen Ende (11a) einen aufgeweiteten Rohrquerschnitt mit einem Innengewinde aufweist, welches mit einem entsprechenden Aussengewinde des die Aussenwand durchstossenden Rohres (104) verschraubt werden kann.

2. Auslaufarmatur nach Anspruch 1, **dadurch gekennzeichnet, dass** die Länge des Leitungsrohrs (50) und der Spindel (70) derart gewählt ist, dass bei eingeschobener Baueinheit (1) ein Abstand zwischen einer Aussenfläche (100b) der Aussenwand (100) und dem Ventilsitz (62a) mindestens 8 cm, bevorzugt ungefähr 15 cm, beträgt.

3. Auslaufarmatur nach Anspruch 1 oder 2, **dadurch gekennzeichnet, dass** im Bereich des Ventiltellers ein Rückflussverhinderer angeordnet ist, insbesondere dass dazu der Ventilteller über eine Druckfeder an der Spindel befestigt ist.

4. Auslaufarmatur nach einem der Ansprüche 1 bis 3, **dadurch gekennzeichnet, dass** die Dichtungselemente (63, 64) zum Abdichten der Baueinheit (1) gegenüber dem die Aussenwand durchstossenden Rohr (104) im Bereich des Absperrmechanismus (60) an der Baueinheit (1) angeordnet sind.

5. Auslaufarmatur nach Anspruch 4, **dadurch gekennzeichnet, dass** der Ventilsitz (62a) an einem rohrförmigen Aufsatz (62) ausgebildet ist, welcher teilweise das Leitungsrohr (50) umschliesst und welcher im Bereich seines Aussenmantels Dichtungselemente (63, 64) zur Abdichtung gegenüber dem die Aussenwand (100) durchstossenden Rohr (104) umfasst.

6. Auslaufarmatur nach einem der Ansprüche 1 bis 5, **dadurch gekennzeichnet, dass** das Armaturengehäuse (10) ein Innengewinde zum Aufschrauben auf ein entsprechendes Aussengewinde des die Aussenwand durchstossenden Rohrs (104) aufweist.

7. Auslaufarmatur nach einem der Ansprüche 1 bis 6, **dadurch gekennzeichnet, dass** das Armaturengehäuse ein Aussengehäuse (11) sowie einen darin aufgenommenen Einsatz (14) mit einem Lager (14b) für die Spindel (70) und Dichtungselementen (15, 16, 17) zur Abdichtung gegenüber dem Aussengehäuse (11) sowie gegenüber der Spindel (70) umfasst, wobei der Einsatz flüssigkeitsdicht mit dem Leitungsrohr (50) verbunden ist.

8. Verfahren zum Sanieren einer vorhandenen frostsicheren Auslaufarmatur, welche ein eine Aussenwand (100) durchstossendes Rohr (104) sowie eine Auslaufarmatur mit einer Spindel umfasst, wobei am vorderen Ende der Spindel ein Ventilteller zur Abdichtung gegenüber einem an einem Gegenelement angeordneten Ventilsitz angeordnet ist, **gekennzeichnet durch** folgende Schritte:
a) Entfernen der vorhandenen Auslaufarmatur mitsamt der Spindel und dem Ventilteller;
b) Einschieben eines vorderen Endes einer Baueinheit (1) gemäss einem der Ansprüche 1 bis 7 in das vorhandene, die Aussenwand (100) durchstossende Rohr (104);
c) Abdichten der Baueinheit (1) gegenüber dem Rohr (104); und
d) mechanisches Befestigen der Baueinheit (1) **durch** Aufschrauben des am aufgeweiteten Rohrquerschnitt angeordneten Innengewindes des Aussengehäuses (11) auf ein Aussengewinde des Rohres (104).

## Claims

1. Frost-proof outlet fitting, comprising a structural unit (1) which can be inserted by a front end into a pipe (104) passing through an outer wall, having
a) a shut-off mechanism (60) arranged in the region of the front end, comprising a valve seat (62a) and a valve disc (61) interacting therewith;
b) a fitting housing (10) which is arranged at a rear end of the structural unit (1) longitudinally opposite the front end and has an emptying opening (11d, 13) and operating element (71);
c) a conduit pipe (50) which is in liquid-conducting connection with the shut-off mechanism (60) and the emptying opening (11d, 13);
d) a spindle (70) for moving the valve disc (61), wherein the spindle (70) extends in the conduit pipe (50) and couples the operating element (71) to the shut-off mechanism (60); and
e) sealing elements (63, 64) for sealing the structural unit (1) with respect to the pipe (104) passing through the outer wall; wherein
f) with the structural unit (1) inserted, the front end of the conduit pipe (50) opens by way of the shut-off mechanism (60) into the pipe (104) passing through the outer wall, and wherein a length of the conduit pipe (50) and of the spindle (70) is chosen such that, with the structural unit (1) inserted, the shut-off mechanism (60) comes to lie in a frost-proof region (100e) of the outer wall (100) or in a frost-proof region on the inner side of the outer wall,
g) the sealing elements (63, 64) of the structural unit take the form of shaped seals arranged on the casing side with respect to the conduit pipe (50),
**characterized in that**
h) the fitting housing (10) comprises an outer housing (11) which is designed to be substantially tubular, wherein the outer housing (11) has at its front end (11a) a widened pipe cross section with an internal thread which can be screwed with a corresponding external thread of the pipe (104) passing through the outer wall.

2. Outlet fitting according to Claim 1, **characterized in that** the length of the conduit pipe (50) and of the spindle (70) is chosen such that, with the structural unit (1) inserted, a distance between an outer surface (100b) of the outer wall (100) and the valve seat (62a) is at least 8 cm, preferably approximately 15 cm.

3. Outlet fitting according to Claim 1 or 2, **characterized in that** a backflow preventer is arranged in the region of the valve disc, in particular **in that** for this purpose the valve disc is fastened to the spindle via a compression spring.

4. Outlet fitting according to one of Claims 1 to 3, **characterized in that** the sealing elements (63, 64) for sealing the structural unit (1) with respect to the pipe (104) passing through the outer wall are arranged on the structural unit (1) in the region of the shut-off mechanism (60).

5. Outlet fitting according to Claim 4, **characterized in that** the valve seat (62a) is formed on a tubular attachment (62) which partially encloses the conduit pipe (50) and which comprises, in the region of its outer casing, sealing elements (63, 64) for sealing with respect to the pipe (104) passing through the outer wall (100).

6. Outlet fitting according to one of Claims 1 to 5, **characterized in that** the fitting housing (10) has an internal thread for screwing onto a corresponding external thread of the pipe (104) passing through the outer wall.

7. Outlet fitting according to one of Claims 1 to 6, **characterized in that** the fitting housing comprises an outer housing (11) and also an insert (14) accommodated therein with a bearing (14b) for the spindle (70) and sealing elements (15, 16, 17) for sealing with respect to the outer housing (11) and with respect to the spindle (70), wherein the insert is connected to the conduit pipe (50) in a liquid-tight manner.

8. Method for rehabilitating an existing frost-proof outlet fitting which comprises a pipe (104) passing through an outer wall (100) and also an outlet fitting with a spindle, wherein a valve disc for sealing with respect to a valve seat arranged on a counter-element is arranged on the front end of the spindle, **characterized by** the following steps:
a) removing the existing outlet fitting together with the spindle and the valve disc;
b) inserting a front end of a structural unit (1) according to one of Claims 1 to 7 into the existing pipe (104) passing through the outer wall (100);
c) sealing the structural unit (1) with respect to the pipe (104); and
d) mechanically fastening the structural unit (1) by screwing the internal thread of the outer housing (11) that is arranged on the widened pipe cross section onto an external thread of the pipe (104).

## Revendications

1. Robinet de sortie résistant au gel, comprenant une unité de construction (1) pouvant être insérée par une extrémité avant dans un tuyau (104) qui traverse un mur extérieur, comportant
a) un mécanisme de blocage (60) placé dans la zone de l'extrémité avant, comprenant un siège de soupape (62a) et une tête de soupape (61) interagissant avec lui ;
b) un boîtier de robinetterie (10) installé sur une extrémité arrière de l'unité de construction (1) placée longitudinalement en face de l'extrémité avant, muni d'une ouverture de vidange (11d, 13) et d'un élément de commande (71) ;
c) une conduite (50) qui est en liaison permettant le passage de liquides avec le mécanisme de blocage (60) et l'ouverture de vidange (11d, 13) ;
d) une tige (70) permettant de déplacer la tête de soupape (61), la tige (70) s'étendant la conduite (50) et accouple l'élément de commande (71) avec le mécanisme de blocage (60) ; ainsi que
e) des éléments d'étanchéité (63, 64) conçus pour rendre l'unité de construction (1) étanche par rapport au tuyau (104) qui traverse le mur extérieur ; sachant que
f) lorsque l'unité de construction (1) est à l'état inséré, l'extrémité avant de la conduite (50) avec le mécanisme de blocage (60) débouche dans le tuyau (104) qui traverse le mur extérieur et qu'une longueur de la conduite (50) et de la tige (70) est choisie de telle manière que lorsque l'unité de construction (1) est insérée, le mécanisme de blocage (60) aboutit finalement dans une zone résistante au gel (100e) du mur extérieur (100) ou dans une zone résistante au gel sur le côté intérieur du mur extérieur,
g) les éléments d'étanchéité (63, 64) de l'unité de construction sont configurés en tant que joints profilés disposés sur le plan périphérique par rapport à la conduite (50),
**caractérisé en ce que**
h) le boîtier de robinetterie (10) comprend un boîtier extérieur (11) qui adopte une forme essentiellement tubulaire, sachant que le boîtier extérieur (11) présente sur son extrémité avant (11a) une section transversale de tuyau élargie munie d'un filetage intérieur qui peut être vissé sur un filetage extérieur correspondant du tuyau (104) qui traverse le mur extérieur.

2. Robinet de sortie selon la revendication 1, **caractérisé en ce que** la longueur de la conduite (50) et de la tige (70) est choisie de telle façon que lorsque l'unité de construction (1) est insérée, la distance entre une surface extérieure (100b) du mur extérieur (100) et le siège de soupape (62a) atteint au moins 8 cm, et de préférence à peu près 15 cm.

3. Robinet de sortie selon la revendication 1 ou 2, **caractérisé en ce qu'**un clapet anti-retour est installé dans la zone de la tête de soupape, en particulier **en ce que**, dans ce but, la tête de soupape est fixée sur la tige par le biais d'un ressort de compression.

4. Robinet de sortie selon l'une des revendications 1 à 3, **caractérisé en ce que** les éléments d'étanchéité (63, 64) conçus pour rendre étanche l'unité de construction (1) par rapport au tuyau (104) qui traverse le mur extérieur, sont installés dans la zone du mécanisme de blocage (60) sur l'unité de construction (1).

5. Robinet de sortie selon la revendication 4, **caractérisé en ce que** le siège de soupape (62a) est configuré sur un embout en forme de tube (62) qui entoure partiellement la conduite (50) et qui comprend des éléments d'étanchéité (63, 64) dans la zone de sa gaine extérieure afin de créer une étanchéité par rapport au tuyau (104) qui traverse le mur extérieur (100).

6. Robinet de sortie selon l'une des revendications 1 à 5, **caractérisé en ce que** le boîtier de robinetterie (10) comporte un filetage intérieur qui permet de le visser sur un filetage extérieur correspondant du tuyau (104) qui traverse le mur extérieur.

7. Robinet de sortie selon l'une des revendications 1 à 6, **caractérisé en ce que** le boîtier de robinetterie comporte un boîtier extérieur (11) et un insert (14) qui y est logé, comportant un palier (14b) pour la tige (70) et des éléments d'étanchéité (15, 16, 17) pour garantir l'étanchéité par rapport au boîtier extérieur (11) et par rapport à la tige (70), sachant que l'insert est relié à la conduite (50) de manière étanche aux liquides.

8. Procédé conçu pour l'assainissement d'un robinet de sortie existant résistant au gel, robinet qui comprend un tuyau (104) qui traverse un mur extérieur (100), ainsi qu'un robinet de sortie muni d'une tige, sachant qu'un siège de soupape est installé sur l'extrémité avant de la tige afin de garantir l'étanchéité par rapport à un siège de soupape disposé sur un contre-élément,
**caractérisé par** les étapes suivante
a) enlèvement du robinet de sortie existant avec la tige et la tête de soupape ;
b) insertion d'une extrémité avant d'une unité de construction (1) selon l'une des revendications 1 à 7 dans le tuyau (104) existant qui traverse le mur extérieur (100) ;
c) étanchéification de l'unité de construction (1) par rapport au tuyau (104) ; et
d) fixation mécanique de l'unité de construction (1) par le vissage du filetage intérieur du boîtier extérieur (11) installé sur la section transversale élargie du tuyau sur un filetage extérieur du tuyau (104).
